# EUROPÄISCHE PATENTSCHRIFT

(11) **EP 1 941 594 B1**
(45) Veröffentlichungstag und Bekanntmachung des Hinweises auf die Patenterteilung: **09.01.2013**
(21) Anmeldenummer: 06792065.2
(22) Anmeldetag: 14.09.2006
(51) Int. Cl.: H02J 7/00

(54) **LADEVERFAHREN ZUR VERLÄNGERUNG DER LEBENSDAUER VON BATTERIEN UND VORRICHTUNG ZUR DURCHFÜHRUNG DESSELBEN**
CHARGING METHOD FOR EXTENDING A BATTERY SERVICE LIFE AND DEVICE FOR CARRYING OUT SAID METHOD
PROCEDE DE CHARGE POUR AUGMENTER LA LONGEVITE DE BATTERIES ET DISPOSITIF POUR LE REALISER

(30) Priorität: 21.09.2005 DE 102005045107
(43) Veröffentlichungstag der Anmeldung: 09.07.2008
(73) Patentinhaber: Zentrum für Sonnenenergie- und Wasserstoff-Forschung Baden-Württemberg Gemeinnützige Stiftung, 89081 ULm (DE)
(72) Erfinder: JOSSEN, Andreas, 89340 Leipheim (DE); DÖRING, Harry, 89275 Elchingen (DE)
(74) Vertreter: Wagner, Bernhard Peter
(86) Internationale Anmeldenummer: PCT/EP2006/008969
(87) Internationale Veröffentlichungsnummer: WO 2007/033791

(56) Entgegenhaltungen:
- US-A- 5 828 201
- US-A- 6 157 167
- US-A1- 2004 135 544
- US-A1- 2004 145 346
- US-B1- 6 624 612

## Beschreibung

Die Erfindung betrifft ein Ladeverfahren zur Verlängerung der Lebensdauer von Batterien und eine Vorrichtung zur Durchführung desselben.

Die Lebensdauer von Batterien bei ihrem Einsatz zur Zwischenspeicherung von elektrischer Energie in elektrischen Inselsystemen hat einen wesentlichen Einfluß auf die Betriebskosten dieser Systeme, da die Lebensdauer im Vergleich zu allen anderen Systemkomponenten kurz ist und das Auswechseln der Batterien zu hohen Kosten für die Energiespeicherung führt. Eine Verlängerung der Batterielebensdauer führt somit automatisch zu signifikant geringeren Betriebskosten der Anlage.

Elektrische Inselsysteme sind Systeme, die unabhängig von einem öffentlichen Stromnetz sind und die im Wesentlichen aus einer Stromquelle, z.B. einer photovoltaischen Anlage, einer Wasserkraftanlage oder einem Dieselgenerator und einem Energiezwischenspeicher, in der Regel einer Batterie, bestehen. Bekannt sind Einsatzmöglichkeiten beispielsweise für Uhren oder Parkscheinautomaten, bei denen eine Stromversorgung durch ein öffentliches Netz zu aufwendig ist. Inselsysteme als autarke elektrische Stromversorgungssysteme machen aber auch dort Sinn, wo das nächste öffentliche Stromnetz sehr weit entfernt ist, was beispielsweise einen Einsatz in Entwicklungsländern sinnvoll macht.

Eine der Hauptursachen eines frühzeitigen Batterieausfalls ist die Bildung von grobkristallinen Entladeprodukten an den Elektroden einer Batterie. Im Falle einer Bleibatterie entsteht Bleisulfat in feinkristalliner Form als Entladeprodukt. In dieser Form kann es wieder aufgeladen werden, allerdings neigen die Bleisulfatkristalle aus energetischen Gründen zur Umkristallisation und bilden im Laufe der Zeit immer größere Kristalle, wodurch die Ladbarkeit (Bleisulfat ist ein Nichtleiter) der Batterie immer schlechter wird. Sind die Kristalle so groß, dass sie an der Ladereaktion nicht mehr partizipieren, dann spricht man von harter Sulfatation oder grobkristallinem Bleisulfat. Die Bildung von grobkristallinem Bleisulfat kann jedoch durch ein Vollladen der Batterie, bei dem alle Sulfatkristalle wieder in geladenes Aktivmaterial umgewandelt werden, verhindert werden. Daher verfügen moderne Laderegler über spezielle Ladestrategien, um von Zeit zu Zeit durch Anhebung der Ladespannung eine verstärkte Ladung der Batterie zu ermöglichen.

Allerdings ist die bei Inselsystemen zur Verfügung stehende Energie und Ladezeit oft nicht ausreichend, um den Vollladezustand zu erreichen. Daher werden zum Nachladen der Batterie Dieselgeneratoren verwendet, die aber nur wirtschaftlich bis zu einem Ladezustand von etwa 80 bis 90 % arbeiten. Ein Vollladen, das eine Sulfatierung der Batterie verhindert, kann somit nur auf sehr unwirtschaftliche Weise erreicht werden.

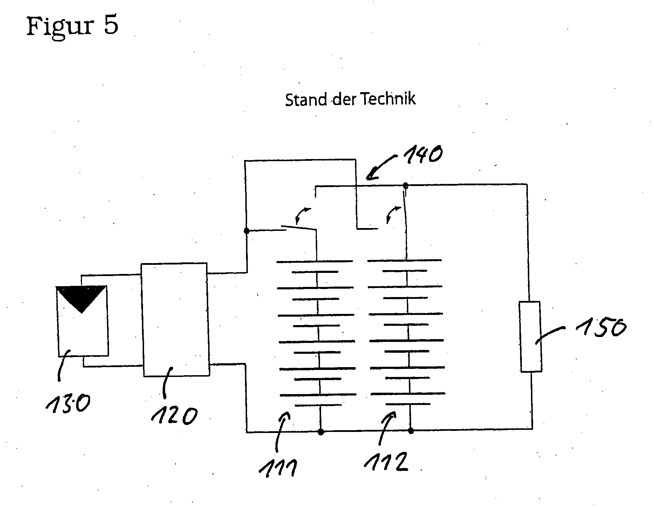

Eine weitere Möglichkeit, um ein Vollladen der Batterie zu erreichen, wurde im Rahmen des EU-Projekts Multibat (European Project ENK6-CT2000-00326) entwickelt. Das Funktionsprinzip dieser Vorrichtung ist in Fig. 5 als Blockschaltbild dargestellt. Hierin werden mehrere, im gezeigten Fall beispielsweise zwei parallel geschaltete Batteriestränge 111, 112 verwendet, die über einen Solarladeregler 120 von einem Solargenerator 130 gespeist werden. Die Ladung und Entladung der Batteriestränge 111, 112 erfolgt stets getrennt durch eine Schaltmatrix 150, die zumindest einen der Batteriestränge 111, 112 mit dem Solarladeregler 120 und die restlichen Batteriestränge 111, 112 mit einem Verbraucher 150 verbindet, so dass mindestens einer der Batteriestränge 111,112 vom Solargenerator 130 über den Solarladeregler 120 vollgeladen werden kann, während die restlichen eine Last speisen. Dieses Verfahren führt jedoch zu einer deutlich höheren Zyklenbelastung der Batterie und zu einem schlechteren Gesamtwirkungsgrad; da der Solargenerator 130 sehr häufig nicht im Punkt der maximalen Leistung betrieben werden kann und die gesamte Energie über die Batterie fließt. Zudem ist die Aufspaltung in mehrere Batteriestränge nur bei größeren Anlagen möglich und die Installation muss von Anfang an geplant sein, d. h. eine Nachrüstung einer bestehenden Anlage ist mit einem hohen Aufwand verbunden. Der aparative Aufwand ist zudem erheblich.

Eine weitere Möglichkeit der Verlängerung der Batterielebensdauer besteht in der permanenten Angleichung der Ladezustände aller Batteriezellen einer Batterie. Bei diesen Verfahren werden die Zellspannungen mittels verschiedener Schaltungskonzepte angeglichen.

So beschreibt die US 6,437,539 ein System, bei dem die Spannung jeder Batteriezelle gemessen, ein Mittelwert der gemessenen Spannungen bestimmt, und die Spannung einer betreffenden Batteriezelle über eine dissipative Stromschleife kontrolliert bis auf den mittleren Spannungswert entladen wird.

Bei der DE 39 40 929 wird in ähnlicher Weise ein Spannungsausgleich durch einen Ladungsaustausch zwischen den einzelnen geladenen Akkumulatoren über zwischengeschaltete Kondensatoren erreicht und bei der US 6,841,971 erfolgt die Energieübertragung für einen Spannungsausgleich zwischen unterschiedlich geladenen Batteriezellen mittels Induktivitäten.

Die DE 103 33 343 A1 beschreibt ein Verfahren und Vorrichtungen zur Durchführung eines automatischen Ladezustandsausgleichs. Für die Durchführung dieses automatischen Ladezustandsausgleichs wird ein erster Energiespeicher verwendet, der vollgeladen wird, um bei einem erforderlichen Ladezustandsausgleich einen zweiten, nicht vollständig geladenen Energiespeicher auf 100 % Nennleistung zu laden. Danach werden ca. 5 bis 10 % der Ladung des zweiten Energiespeichers wieder in den ersten Energiespeicher zurückgespeist. Diese wechselseitige Rückspeisung wird mittels eines ersten und eines zweiten Wechselrichters durch eine Batteriesteuerung so lange durchgeführt, bis ein Ladezustandsausgleich des Energiespeichers erreicht ist.

Die DE 698 06 885 T2 beschreibt ein Verfahren zur Aufrechterhaltung der Ladekapazität von Antriebsbatteriemodulen eines elektrischen Hybridfahrzeuges. Hierbei werden ein oder mehrere Module der Fahrbatterie periodisch gewartet, in dem sie vollgeladen und dann auf ihren Ladungszustand vor dem vollen Aufladen entladen werden. Mit dieser Wartungsprozedur erhält jedes Modul gelegentlich eine volle Ladung, um eine Sulfatierung der Batteriezellen zu verhindern. Bei der Wartung wird bei einem Nicht-Betrieb eines Fahrzeugs ein ausgewähltes Modul mittels Energie aus einer Hilfsbatterie voll aufgeladen. Nach dem Vollladen des ausgewählten Moduls wird dieses auf den vor dem Laden gespeicherten Ladungszustand mittels einer Steuerung entladen. Im Falle einer vorzeitigen Inbetriebnahme des Fahrzeugs wird die Wartungsprozedur, unabhängig vom erreichten Ladungszustand des Moduls, unterbrochen und das Modul in Richtung auf einen Ladungszustand, der in der Nähe des durchschnittlichen Ladezustands der übrigen Module liegt, entladen. Ein Wiederaufladen der Hilfsbatterie erfolgt nicht aus der Fahrbatterie als Ganzes, sondern statt dessen aus denjenigen Modulen der Fahrbatterie, die die höchste Spannung haben, wodurch das Modul mit der höchsten Spannung tendenziell entladen wird und gleichzeitig die Hilfsbatterie wenigstens teilweise wieder aufgeladen wird.

Die US 2004/0135544 A1beschreibt ein System und ein Verfahren zur Bestimmung und zum Ausgleichen eines Ladezustands von in Reihe geschalteten elektrischen Batteriezellen. Hierbei umfasst ein Batteriezellenausgleichssystem eine Gesamtbatterie mit einer Vielzahl von in Reihe geschalteten Batteriezellen, wobei die Gesamtbatterie mit einer Schaltmatrix verbunden ist, welche jede Batteriezelle in der Gesamtbatterie einzeln auswählen und elektrisch mit einem Ausgleichswandler verbinden kann. Wenn der Ladezustand einer einzelnen Ladezelle unterschiedlich zu einem Zielladezustand ist, weist eine Steuereinheit den Ausgleichswandler an, Energie zwischen der einzelnen Batteriezelle und der Gesamtbatterie zu übertragen, um den Ladezustand der ausgewählten Batteriezelle auf einen Zielladezustand zu bringen. Wenn beispielsweise der Ladezustand einer ausgewählten Batteriezelle größer als der Zielzustand ist, wird die ausgewählte Batteriezelle über den Ausgleichswandler entladen, wobei durch den Entladestrom die Gesamtbatterie geladen wird. Wenn allerdings der Ladezustand der ausgewählten Batteriezelle kleiner als sein Zielzustand ist, wird die ausgewählte Batteriezelle durch den Ausgleichswandler so lange mittels eines Stroms von der Gesamtbatterie geladen, bis ein Zielladezustand erreicht ist. Der Zielladezustand im stromfreien Zustand der Gesamtbatterie entspricht der Gesamtspannung der Gesamtbatterie gemittelt auf die Gesamtzahl der Batteriezellen, also einem mittleren Ladezustand der Gesamtbatterie.

Die Aufgabe der vorliegenden Erfindung ist es, ein weiteres Ladeverfahren und eine weitere Vorrichtung zur Verlängerung der Lebensdauer von Batterien bereitzustellen, das bzw. die eine Bildung von grobkristallinen Entladeprodukten in einer Batterie bei zeitlich eingeschränkter Leistung einer Ladequelle vermeidet und somit eine Verlängerung der Batterielebensdauer erzielt.

Die Aufgabe wird durch das Verfahren nach Anspruch 1 und die Vorrichtung nach Anspruch 14 gelöst. Vorteilhafte Ausgestaltungen und Weiterbildungen des Verfahrens und der Vorrichtung werden in den Unteransprüchen dargelegt.

Erfindungsgemäß wird bei einem Ladeverfahren zur Verlängerung der Lebensdauer von Batterien neben einem Hauptladevorgang einer Batterie mit zumindest zwei in Serie geschalteten Batteriezellen ein Hilfsladevorgang durchgeführt, der die folgenden Schritte umfasst: selektives Vollladen einer ausgewählten Batteriezelle, wobei durch das Vollladen und definierte Überladen der Batteriezelle eine Säureschichtung abgebaut und die Bildung grobkristalliner Entladeprodukte vermieden wird, und das Angleichen des Ladezustands der ausgewählten Batteriezelle an die Ladezustände der anderen Batteriezellen, wobei als Stromquelle für das Vollladen einer ausgewählten Batteriezelle die Gesamtbatterie verwendet wird.

Es ist also vorgesehen, ein Ladeverfahren zur Verlängerung der Lebensdauer von Batterien bereitzustellen, bei dem eine Batteriezelle innerhalb einer Serienschaltung von Batteriezellen ausgewählt und danach vollgeladen wird, und bei dem nach dem Vollladen der Ladezustand dieser ausgewählten Batteriezelle wieder den Ladezuständen der anderen Batteriezellen angeglichen wird.

Hierbei ist es zweckmäßig, dass das selektive Laden unter Verwendung eines Hilfsladereglers erfolgt.

Als Stromquelle für den selektiven Ladevorgang wird erfindungsgemäß die Gesamtbatterie verwendet, wobei die Verwendung der Gesamtbatterie als Stromquelle besonders vorteilhaft ist, da dies das Ladeverfahren vereinfacht.

Da das Ausgleichen des Ladezustands dissipativ erfolgen kann, kann somit ein einfacher Schaltungsaufbau des Hiltsladereglers erreicht werden.

Hierbei ist es zweckmäßig, das zum Ausgleichen des Ladezustandes die Spannung der ausgewählten Batteriezelle an eine mittlere Zellspannung angeglichen wird.

Für einen möglichst geringen Aufwand bei der Steuerung des selektiven Ladevorgangs kann das selektive Laden in regelmäßigen Zeitabständen erfolgen.

Jedoch ist es auch vorteilhaft, dass die Auswahl und Ladedauer der ausgewählten Batteriezellen in Abhängigkeit von zumindest einem Batterieparameter oder eine Kombination von Batterieparametern gesteuert wird, da auf diese Weise ein unnötiges Vollladen von Batteriezellen, die einen selektiven Ladevorgang nicht benötigen, vermieden und ein Energieverlust durch späteres dissipatives Ausgleichen des Ladezustands verhindert wird.

Dieser Batterieparameter kann entweder ein Parameter einer Batteriezelle oder der Gesamtbatterie sein. Dies besitzt den Vorteil, dass einerseits eine einzelne Batteriezelle, jedoch auch der Zustand der Gesamtbatterie in die Steuerung des selektiven Ladevorgangs mit eingehen.

Um jederzeit einen Überblick über die Zustände der Batteriezellen oder der Gesamtbatterie zu behalten, ist es besonders zweckmäßig, wenn zumindest ein Batterieparameter ständig überwacht wird, es kann jedoch auch vorgesehen sein, dass zumindest ein Batterieparameter nur während des selektiven Ladevorgangs überwacht wird, da in diesem Fall die auszuwertende Informationsmenge geringer ist als bei einer ständigen Überwachung.

Gemäß einer vorteilhaften Weiterbildung der Erfindung wird zumindest ein Batterieparameter für die Ermittlung einer Ladehistorie aufgezeichnet. Dabei ist es von Vorteil, dass eine Ladehistorie einer Batteriezelle zuverlässigere Aussagen über den jeweiligen Zustand erlaubt. Hierbei ist es beispielsweise zweckmäßig, Batteriezellen, die seltener vollgeladen wurden, bei der Auswahl für den selektiven Ladevorgang zu bevorzugen.

Der Batterieparameter kann ein Spannungswert, ein Stromwert, ein Temperaturwert, ein Ladezustand oder dergleichen sein.

Das erfindungsgemäße Ladeverfahren besitzt den Vorteil, dass es für Bleibatterien, Nickel-Cadmium-Batterien oder Nickel-Metallhybrid-Batterien verwendet werden kann, wobei jedoch die Verwendung für Bleibatterien besonders bevorzugt ist.

Eine erfindungsgemäße Vorrichtung zum Laden einer Batterie, insbesondere unter Verwendung des erfindungsgemäßen Verfahren weist eine Hauptladequelle, eine Batterie mit zumindest zwei in Serie geschalteten Batteriezellen, die mit der Hauptladequelle verbunden ist und eine Hilfsladequelle auf, die jeweils mit zumindest einer ausgewählten Batteriezelle zum selektiven Laden verbunden werden kann.

Die Vorrichtung ermöglicht es also, selektiv eine Batteriezelle aus einer Serienschaltung von Batteriezellen auszuwählen und mit einer Hilfsladequelle zu verbinden, um diese auch bei eingeschränkter Leistung der Hauptladequelle vollzuladen.

Hierbei ist es zweckmäßig, dass die Hauptladequelle neben einer Hauptstromquelle auch einen Hauptladeregler umfasst.

Die erfindungsgemäße Vorrichtung ist besonders vorteilhaft, falls die Hauptstromquelle eine Solarzellenanlage, eine Windkraftanlage, eine Lichtmaschine eines Kraftfahrzeugs oder eine vergleichbare Energiequelle ist, die aufgrund äußerer Umstände nur zeitlich eingeschränkt Energie liefern kann, da in diesen Fällen ein Vollladen der Gesamtbatterie nicht oder allenfalls nur selten möglich ist.

Bei einer vorteilhaften Weiterbildung der Erfindung umfasst die Hilfsladequelle eine Stromquelle und einen Hilfsladeregler, wobei die Stromquelle der Hilfsladequelle die Hauptstromquelle, der Ausgang des Hauptladereglers oder die Gesamtbatterie sein kann. Dies besitzt den Vorteil, dass der Schaltungsaufbau der erfindungsgemäßen Vorrichtung einfach ist.

Als Stromquelle der Hilfsladequelle kann jedoch auch ein durch einen Verbrennungsmotor oder eine Wärmekraftmaschine betriebener Generator, eine Brennstoffzelle oder ein öffentliches Stromnetz verwendet werden, wodurch die Gesamtbatterie entlastet wird.

In einer vorteilhaften Ausgestaltung der Erfindung kann die ausgewählte Batterie über eine Schaltmatrix mit der Hilfsladequelle verbunden werden. Hierbei ist es besonders vorteilhaft, wenn diese Schaltmatrix über Steuerleitungen mit einer Steuervorrichtung zur Steuerung der Schaltvorgänge verbunden ist.

In einer weiteren vorteilhaften Ausgestaltung der Erfindung ist die Steuervorrichtung mit zumindest einem Batteriesensor zur Übertragung zumindest eines Batterieparameters an die Steuervorrichtung verbunden.

In einer noch weiteren vorteilhaften Ausgestaltung der Erfindung kann die Steuervorrichtung mit der Hilfsladequelle zur Übertragung zumindest eines Batterieparameters einer ausgewählten Batteriezelle an die Steuervorrichtung während des selektiven Ladevorgangs verbunden sein. Dies hat den Vorteil, dass die Hilfsladequelle einerseits als Ladequelle und andererseits als Überwachungsvorrichtung für die Ermittlung von Batterieparametern genutzt werden kann. Des Weiteren können Ladeparameter von der Steuervorrichtung an die Hilfsladequelle übertragen werden.

Um noch weitere Parameter in die Steuerung des selektiven Ladevorgangs einfließen lassen zu können, ist in einer besonders vorteilhaften Ausbildung der Erfindung die Steuervorrichtung mit der Hauptladequelle zur Übertragung zumindest eines Gesamtbatterieparameters oder eines Parameters der Hauptstromquelle an die Steuervorrichtung verbunden.

Die Erfindung wird im Folgenden beispielsweise anhand der Zeichnung näher erläutert. Es zeigen:
Fig. 1 ein Blockschaltbild einer Vorrichtung zum Laden einer Batterie gemäß einem ersten Ausführungsbeispiel der Erfindung,
Fig. 2 ein Blockschaltbild einer Vorrichtung zum Laden einer Batterie gemäß einem zweiten Ausführungsbeispiel der Erfindung,
Fig. 3 ein Blockschaltbild einer Vorrichtung zum Laden einer Batterie gemäß einem dritten Ausführungsbeispiel der Erfindung,
Fig. 4 ein Blockschaltbild einer Vorrichtung zum Laden einer Batterie gemäß einem vierten Ausführungsbeispiel der Erfindung, und
Fig. 5 ein Blockschaltbild einer Vorrichtung zum Laden einer Batterie gemäß dem Stand der Technik.

In den verschiedenen Figuren der Zeichnung sind einander entsprechende Bauteile mit gleichen Bezugszeichen versehen.

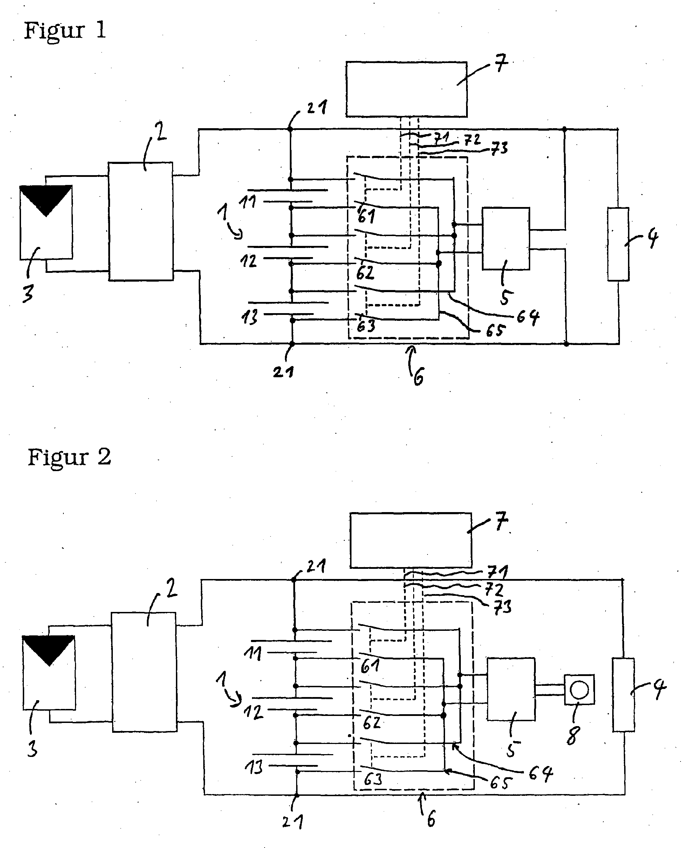

Es soll zunächst ein erstes Ausführungsbeispiel der Erfindung anhand der Fig. 1 genauer erläutert werden.

In der erfindungsgemäßen Vorrichtung ist eine Batterie 1 über die Knotenpunkte 21 mit einem Hauptladeregler 2 verbunden, der wiederum mit einer Hauptstromquelle 3 in Verbindung steht. An die Batterie 1 und den Hauptladeregler 2 kann parallel ein Verbraucher 4 angeschlossen werden. Somit wird die Batterie 1, wenn der Energieverbrauch des Verbrauchers 4 höher ist als die Leistung der Hauptstromquelle 3, entladen und im anderen Falle aufgeladen.

Um der Einfachheit Willen ist die Batterie 1 als Serienschaltung von Batteriezellen 11, 12, 13 dargestellt, die Batterie 1 kann jedoch aus einer Vielzahl von in Serie geschalteten Batteriezellen aufgebaut sein. Hierbei können die Batteriezellen 11, 12, 13 Batterie-Einzelzellen oder galvanische aber auch Batterieblöcke sein, die mehrere Batterie-Einzelzellen umfassen. Die Batterie 1 kann eine Bleibatterie, eine Nickel-Cadmium-Batterie oder eine Nickel-Metallhydrid-Batterie sein, besonders bevorzugt ist jedoch eine Bleibatterie. Grundsätzlich ist jedoch jede Art von. Batterie geeignet, bei der durch Vollladen grobkristalline Entladeprodukte vermieden werden können oder bei der durch Vollladen eine Verlängerung der Lebensdauer erreicht werden kann. Im Falle einer Verwendung von Bleibatterien können geschlossene Bleibatterien oder verschlossene Bleibatterien (wie Vlies-Batterien oder Gel-Batterien) verwendet werden.

Als Hauptladeregler 2 können eine Vielzahl von Ladegerättypen eingesetzt werden, jedoch sind geregelte Ladegeräte, mit denen eine gewünschte Ladekennlinie beim Laden der Batterie durchlaufen werden kann, besonders bevorzugt. Als Ladekennlinien können beispielsweise eine IU- oder eine Wa-Kennlinie (nach DIN 41772) durchlaufen werden. Andere Kennlinien nach DIN 41772 sind jedoch auch möglich, wie z. B. eine WoWa-, eine IoIa-, eine IUIa-oder eine IUoU-Kennlinie.

Die Hauptstromquelle 3 ist vorzugsweise eine Stromquelle, die aufgrund äußerer Umstände nur zeitlich eingeschränkt ausreichend Energie liefern kann. Insbesondere kann dies eine Solarzellenanordnung, die in photovoltaischen Inselanlagen verwendet wird, eine Wind- oder Wasserkraftanlage oder eine vergleichbare Stromquelle sein, die natürliche Ressourcen nutzt, die aufgrund der Wetterlage, der Gezeiten oder des Sonnenstandes nicht konstant Energie liefern. Die Hauptstromquelle 3 kann jedoch auch eine Lichtmaschine eines Kraftfahrzeugs sein.

Somit kann bei dem Hauptladevorgang die Gesamtbatterie 1 durch die Hauptladequelle, die den Hauptladeregler 2 und den Hauptgenerator 3 umfasst, aufgeladen werden, solange der Hauptgenerator 3 mehr Energie liefert, als benötigt wird, um den Verbraucher 4 mit elektrischer Energie zu versorgen.

Da durch den Hauptladevorgang der gesamten Batterie diese jedoch nicht regelmäßig vollgeladen werden kann, sind weitere Vorrichtungen zur Durchführung eines Hilfsladevorgangs vorgesehen, die im Folgenden beschrieben werden sollen.

Ein Hilfsladeregler 5 ist an der Eingangsseite mit der Gesamtbatterie 1 und an seiner Ausgangsseite mit einer Schaltmatrix 6 verbunden, die über Schalter 61, 62, 63 selektiv zumindest eine der Batteriezellen 11, 12, 13 mit dem Hilfsladeregler 5 verbinden kann. Es wird wiederum darauf Wert gelegt, dass lediglich um der Einfachheit Willen die Schaltmatrix. 6 mit nur drei Schaltern 61, 62, 63 dargestellt ist. Die Schalter 61, 62, 63 werden über entsprechende Steuerleitungen 71, 72 und 73 durch eine Steuervorrichtung 7 geschaltet. Der Hilfsladeregler 5 umfasst in diesem Ausführungsbeispiel einen Laderegler/Entladeregler, der typischer Weise ein Gleichstromsteller ist. Zusätzlich kann der Hilfsladeregler 5 jedoch noch spezielle Schaltungen umfassen, die einen dissipativen oder nichtdissipativen Spannungsausgleich der ausgewählten Batteriezelle ermöglicht. Dies kann z. B. ein Ladungsausgleichssystem mit geschalteten Kondensatoren oder Induktivitäten sein, der Ladungsausgleich kann jedoch auch dissipativ über geschaltete Widerstände durchgeführt werden.

Die Schalter 61, 62, 63 der Schaltmatrix 6 verbinden im geschlossenen Zustand den Pluspol bzw. Minuspol einer ausgewählten Batteriezelle mit einer Plusleitung 64 bzw. Minusleitung 65. Die Plusleitung 64 und Minusleitung 65 ist wiederum mit dem Ausgang des Hilfsladereglers 5 verbunden. Obwohl die Verwendung der Schaltmatrix 6 bevorzugt ist, kann jedoch die zu ladende Batteriezelle direkt mit dem Hilfsladeregler 5 verbunden werden, z. B. manuell durch einen Benutzer.

Die Steuervorrichtung 7 wählt in dem ersten Ausführungsbeispiel der Erfindung die selektiv zu ladenen Batteriezellen in Abhängigkeit eines internen Parameters aus. So können beispielsweise Zeitdauer eines selektiven Ladevorgangs oder die Intervalldauer zwischen den Ladevorgängen sowie eine bestimmte Reihenfolge der zu ladenden Batteriezellen 11, 12, 13 in der Steuervorrichtung 7 gespeichert sein und durch diese entsprechend ausgeführt werden. Es ist jedoch auch möglich, dass die Steuervorrichtung 7 durch einen Benutzer manuell bedient wird.

Die Fig. 2 zeigt eine Vorrichtung zum Laden einer Batterie gemäß einem zweiten Ausführungsbeispiel.

Das zweite Ausführungsbeispiel entspricht in Aufbau und Funktionalität im Wesentlichen dem Aufbau und der Funktionalität des ersten Ausführungsbeispiels, jedoch wird in diesem Ausführungsbeispiel der Hilfsladeregler 5 eingangsseitig von einer Hilfsstromquelle 8 versorgt. Die Hilfsstromquelle 8 kann ein durch einen Verbrennungsmotor oder eine Wärmekraftmaschine betriebener Generator sein. Da die Erfindung besonders vorteilhaft bei einem Einsatz in elektrischen Inselsystemen ist, die regenerative und umweltverträgliche Energiequellen nutzen, ist eine Kombination von Wärmekraftmaschine (z. B. ein Stirlingmotor) und Generator, die ein vorhandenes Wärmereservoir mit hohem Wirkungsgrad in elektrische Energie umwandelt, besonders bevorzugt. Die Hilfsstromquelle 8 kann jedoch auch ein öffentliches Stromnetz sein, falls die Anlage als Kraftwerk an ein öffentliches Netz angeschlossen ist. Im Falle der Verwendung in einem Kraftfahrzeug kann die Hilfsstromquelle 8 jedoch auch die Stromversorgung eines Haushalts sein.

Ferner kann die Hilfsstromquelle 8 eine Brennstoffzelle sein. Die Verwendung einer Brennstoffzelle ist besonders geeignet in photovoltaischen Inselsystemen. Da immer nur eine Batteriezelle oder eine relativ kleine Gruppe von Batteriezellen nachgeladen wird, reicht eine Brennstoffzelle mit relativ kleiner Leistung. Somit kann ein Photovoltaik-Brennstoffzellenhybrid mit minimalem Schaltungsaufwand geschaffen werden. Die notwendige Leistung der Brennstoffzelle für eine 10 KWh-Batterie ist etwa 100 W. Der Hilfsladeregler 5 weist in der Regel eine kleinere Ausgangsspannung als Eingangsspannung auf, dieses Verhältnis kann jedoch, insbesondere bei der Verwendung von Brennstoffzellen, umgekehrt werden.

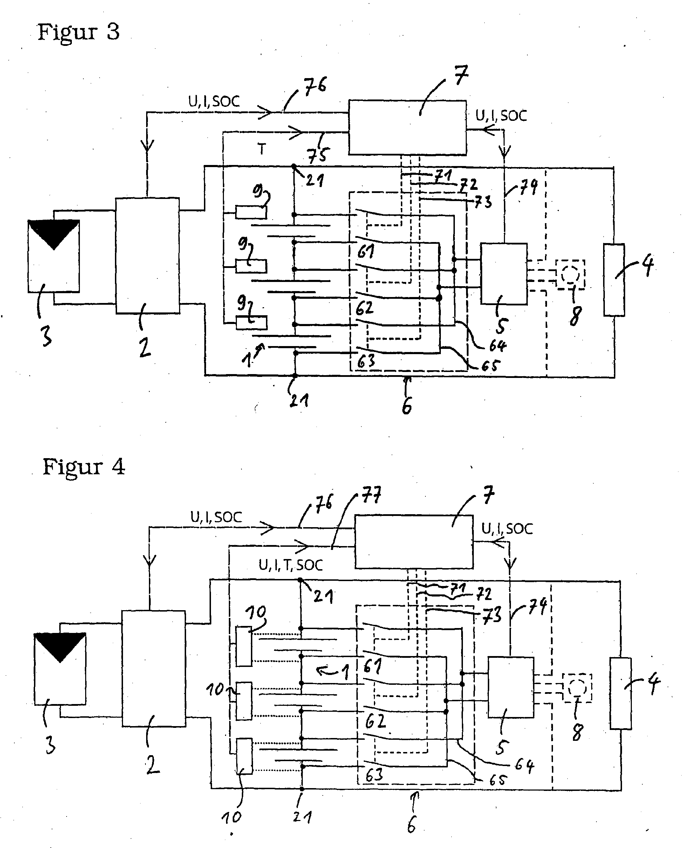

Eine Vorrichtung zum Laden einer Batterie gemäß einem dritten Ausführungsbeispiel ist in Fig. 3 gezeigt. Die Eingangsversorgung des Hilfsladereglers 5 kann entweder entsprechend dem ersten Ausführungsbeispiel durch den Hauptladeregler 2 oder durch die Gesamtbatterie 1 oder entsprechend dem zweiten Ausführungsbeispiel der Erfindung durch die Hilfsstromquelle 8 erfolgen, daher sind diese beiden Möglichkeiten gestrichelt angedeutet.

Die Steuervorrichtung 7 kann neben festgelegten internen Parametern zusätzlich mit Batterieparametern versorgt werden, um aufgrund dieser die selektiven Ladevorgänge zu steuern. Hierfür ist die Steuervorrichtung 7 mit dem Hilfsladeregler 5 über eine Batteriezellendatenleitung 74 verbunden. Darüber hinaus kann die Steuervorrichtung 7 über eine Sensordatenleitung 75 mit Batteriesensoren 9, die bei den Batteriezellen angeordnet sind, verbunden sein. In einer weiteren Ausgestaltung des dritten Ausführungsbeispiels ist die Steuervorrichtung 7 über eine Gesamtbatteriedatenleitung 76 mit dem Hauptladeregler 2 verbunden.

Über die Gesamtbatteriedatenleitung 76 können beispielsweise Daten über die Hauptstromquelle 3 oder über die Gesamtbatterie 1 an die Steuervorrichtung 7 gesendet werden. Auf diese Weise kann ermittelt werden, welche Leistung der Hauptgenerator erbringt oder wie das Verhältnis dieser Leistung zu der Verbraucherlast ist. Der Hauptladeregler 2 kann jedoch auch den Gesundheitszustand (SOH), den Ladezustand (SOC), die aktuelle Gesamtspannung U, den Ladestrom I, das Reagieren der Gesamtbatterie auf Anlegen einer Last, das Anliegen einer Last oder die Impedanz der Gesamtbatterie messen und an die Steuervorrichtung 7 übertragen.

Zusätzlich oder anstatt der Gesamtbatteriedatenleitung 76 kann über die Batteriezellendatenleitung 74 die oben genannten Batterieparameter einer einzelnen Batteriezelle ermittelt und an die Steuervorrichtung 7 gesendet werden. Die Übermittlung der Batteriezelldaten an die Steuervorrichtung 7 kann hierbei entweder während eines selektiven Ladevorgangs der Batteriezelle oder in einem Testdurchlauf erfolgen, bei dem alle Batteriezellen 11, 12, 13 durch die Steuervorrichtung 7 der Reihe nach angesteuert werden, damit eine Messeinheit im Hilfsladeregler 5 die Batterieparameter der Batteriezellen 11, 12, 13 aufnimmt und an die Steuervorrichtung 7 weitersendet. Das Ansteuern der Batteriezellen 11, 12, 13 zur Ermittlung der Batterieparameter kann jedoch auch in einer zufälligen Reihenfolge erfolgen.

Optional können noch Batteriesensoren 9 eingesetzt werden, die beispielsweise die Temperatur T oder den Füllstand der Batteriezelle 11, 12, 13 messen und diesen Wert an die Steuervorrichtung 7 über eine Sensordatenleitung 75 senden. Hierbei kann entweder jede Batteriezelle 11, 12, 13 oder vorbestimmte Batteriezellen mit einem Batteriesensor 9 versehen sein. Es kann zusätzlich ein Batteriesensor 9 vorgesehen sein, der den Zustand der Gesamtbatterie 1 misst.

Die Gesamtbatteriedatenleitung 76 sowie die Batteriezellendatenleitung 74 können bidirektionale Datenleitungen sein, wobei von der Steuervorrichtung 7 an den Hauptladeregler 2 bzw. den Hilfsladeregler 5 Hauptladeparameter bzw. Hilfsladeparameter gesendet werden, die in Abhängigkeit der ermittelten Batterieparameter der Gesamtbatterie bzw. der ausgewählten Batteriezelle ein entsprechend ermitteltes Ladeverfahren steuern.

Fig. 4 zeigt eine Vorrichtung zum Laden einer Batterie gemäß eines vierten Ausführungsbeispiels der Erfindung. Die Vorrichtung entsprechend dem vierten Ausführungsbeispiel ähnelt in Aufbau und Funktion dem Aufbau und der Funktion des dritten Ausführungsbeispiels, jedoch werden hier die Batterieparameter von ausgewählten Batteriezellen direkt von einer Sensoranordnung 10 zur gleichzeitigen Erfassung mehrerer Parameter, im folgenden Batteriemultisensoren genannt, gemessen und über die Batteriemultisensordatenleitung 77 an die Steuervorrichtung 7 übermittelt. Hierbei kann entweder jede Batteriezelle 11, 12, 13 mit einem Batteriemultisensor 10 in Verbindung stehen, es kann jedoch auch nur bei vorbestimmten Batteriezellen 11, 12, 13 der Fall sein. Diese Anordnung besitzt den Vorteil, dass beispielsweise jede Batteriezelle 11, 12, 13 ständig überwacht werden kann.

Im Folgenden soll ein erfindungsgemäßes Ladeverfahren, das mit der oben beschriebenen Vorrichtung entsprechend der verschiedenen Ausführungsbeispiele durchgeführt werden kann, beschrieben werden.

Bei diesem Verfahren wird neben dem Hauptladevorgang ein Hilfsladevorgang durchgeführt, bei dem ausgewählte Batteriezellen 11, 12, 13 oder bei großen Batterienanlagen Zellgruppen periodisch vollgeladen werden, es erfolgt also ein selektives Laden zumindest einer aus der Batterie 1 ausgewählten Batteriezelle 11, 12, 13 über den normalen Ladezustand der Batterie 1 hinaus. Nach diesem Schritt wird der Ladezustand der ausgewählten Batteriezelle 11, 12, 13 oder der Zellgruppe wieder auf den normalen Ladezustand der Batterie 1 hin ausgeglichen. Dieser normale Ladezustand kann beispielsweise eine mittlere Zellspannung sein, wobei die mittlere Zellspannung der gemittelten Spannung über alle Batteriezellen 11, 12, 13 entspricht. Das Ausgleichen des Ladezustands erfolgt durch kontrolliertes Entladen der zuvor aufgeladenen Batteriezelle 11, 12, 13 oder Zellgruppe. Die durch die Entladung verfügbare Energie kann entweder der Gesamtbatterie 1 zugeführt werden oder im einfachsten Fall dissipativ auch nur in Wärme umgesetzt werden. Dieser Vorgang kann zyklisch für alle Batteriezellen 11, 12, 13 durchgeführt werden oder in Abhängigkeit eines Batterieparameters einer Batteriezelle 11, 12, 13 oder der Gesamtbatterie 1 durchgeführt werden. Somit ist es beispielsweise möglich, dass in Solaranlagen auch in Perioden mit geringer Sonneneinstrahlung eine Batteriezelle voll geladen wird. Bei Kraftfahrzeugen kann eine Batteriezelle beispielsweise über Nacht vollgeladen werden. Wenn die Zahl der Batteriezellen größer als 15 ist, wie dies bei großen Batterieanlagen der Fall ist, ist eine Aufteilung in ca. 5 bis 20 Zellgruppen, die jeweils 3 bis 5 Zellen umfassen können, sinnvoll. Die Auswahl bzw. Ladedauer und Ladeverfahren der Batteriezellen 11, 12, 13 erfolgt in Abhängigkeit der oben beschriebenen Batterieparameter, so kann hierfür auch eine Ladehistorie einer Batteriezelle oder der Gesamtbatterie 1 mit einbezogen werden. Unter Ladehistorie soll hier der gesamte zeitliche Verlauf oder eine Reihe von unterbrochenen zeitlichen Verläufen zumindest eines Batterieparameters wie die Impedanz, der Ladestrom I, die Spannung U, das Reagieren der Batteriezellen 11, 12, 13 auf eine Last, der Ladezustand, die Temperatur T oder der aus der Kombination eines Teils oder aller Batterieparameter ermittelte "Gesundheitszustand" (SOH state of health) der Batteriezelle verstanden werden. Im einfachsten Fall kann dies bedeuten, dass Batteriezellen, die seltener vollgeladen wurden, bei der Auswahl für den selektiven Ladevorgang bevorzugt werden.

Inbesondere wenn der SOH einer Batteriezelle, Zellgruppe oder der Gesamtbatterie einen vorgebbaren Schwellenwert unterschreitet, sollte die Zelle, die Zellgruppe oder alle Zellen/Zellgruppen selektiv geladen werden, sobald die anderen Betriebsparameter, insbesondere die Energiebilanz von von der Hauptstromquelle 3 gelieferter Energie zu von der Last/dem Verbraucher 4 benötigter Energie oder die Verfügbarkeit einer Hilfstromquelle 8 dies gestattet.

Das Verfahren bietet ferner weitere Vorteile. So können, müssen aber nicht, einzelne Batteriezellen 11, 12, 13 mit einer im Vergleich zur jeweiligen Batteriezellenspannung hohen Spannung geladen werden. Dies ist im Gesamtverband nicht möglich, da sonst die Spannung am Verbraucher unzulässig hoch ist. Des Weiteren kann durch das Vollladen und definierte Überladen eine Säureschichtung abgebaut werden. Zusätzlich bietet die erfindungsgemäße Vorrichtung die Möglichkeit einer Einzelzellüberwachung. Außerdem lässt die gezielte Belastung einzelner Batteriezellen 11, 12, 13 und die vorhandene Messtechnik zusätzliche Schlüsse über den Batteriezustand, insbesondere über den zellbasierten Batteriezustand zu.

Schließlich besitzt das System den Vorteil, dass es zu einem bestehenden Inselsystem zu vergleichsweise geringen Kosten nachinstalliert werden kann.

## Patentansprüche

1. Ladeverfahren zur Verlängerung der Lebensdauer von Batterien, bei dem neben einem Hauptladevorgang einer Batterie (1) mit zumindest zwei in Serie geschalteten Batteriezellen (11, 12, 13) ein Hilfsladevorgang **gekennzeichnet durch** die folgenden Schritte durchgeführt wird:
(a) Selektives Vollladen einer ausgewählten Batteriezelle (11, 12, 13) wobei durch das Vollladen und definierte Überladen der Batteriezelle (11, 12, 13) eine Säureschichtung abgebaut und die Bildung grobkristalliner Entladeprodukte vermieden wird, und
(b) Angleichen des Ladezustands der ausgewählten Batteriezelle an die Ladezustände der anderen Batteriezellen (11, 12, 13),
wobei als Stromquelle für das Vollladen einer ausgewählten Batteriezelle (11, 12, 13) die Gesamtbatterie (1) verwendet wird.

2. Ladeverfahren nach Anspruch 1, **dadurch gekennzeichnet, dass** das selektive Laden unter Verwendung eines Hilfsladereglers (5) erfolgt.

3. Ladeverfahren nach einem der vorstehenden Ansprüche, **dadurch gekennzeichnet, dass** das Angleichen des Ladezustands dissipativ erfolgt.

4. Ladeverfahren nach einem der vorstehenden Ansprüche, **dadurch gekennzeichnet, dass** zum Angleichen des Ladezustandes die Spannung der ausgewählten Batteriezelle (11, 12, 13) an eine mittlere Zellspannung angeglichen wird.

5. Ladeverfahren nach einem der vorstehenden Ansprüche, **dadurch gekennzeichnet, dass** das selektive Laden in regelmäßigen Zeitabständen erfolgt.

6. Ladeverfahren nach einem der vorstehenden Ansprüche, **dadurch gekennzeichnet, dass** die Auswahl und Ladedauer der ausgewählten Batteriezelle (11, 12, 13) in Abhängigkeit von zumindest einem Batterieparameter oder einer Kombination von Batterieparametern gesteuert wird.

7. Ladeverfahren nach Anspruch 6, **dadurch gekennzeichnet, dass** der Batterieparameter ein Parameter einer Batteriezelle (11, 12, 13) oder der Gesamtbatterie (1) ist.

8. Ladeverfahren nach Anspruch 6 oder 7, **dadurch gekennzeichnet, dass** zumindest ein Batterieparameter ständig überwacht wird.

9. Ladeverfahren nach einem der Ansprüche 6 bis 8, **dadurch gekennzeichnet, dass** zumindest ein Batterieparameter während des selektiven Ladevorgangs überwacht wird.

10. Ladeverfahren nach einem der Ansprüche 6 bis 9, **dadurch gekennzeichnet, dass** zumindest ein Batterieparameter für die Ermittlung einer Ladehistorie aufgezeichnet wird.

11. Ladeverfahren nach Anspruch 10, **dadurch gekennzeichnet, dass** Batteriezellen (11, 12, 13), die seltener vollgeladen wurden, bei der Auswahl für den selektiven Ladevorgang bevorzugt werden.

12. Ladeverfahren nach einem der Ansprüche 6 bis 11, **dadurch gekennzeichnet, dass** der Batterieparameter ein Spannungswert, ein Stromwert, ein Temperaturwert, ein Ladezustand oder dergleichen ist.

13. Verwendung des Ladeverfahrens nach einem der vorstehenden Ansprüche bei Bleibatterien, Nickel-Cadmium-Batterien oder Nickel-Metallhydrid-Batterien.

14. Vorrichtung zur Verlängerung der Lebensdauer einer Batterie (1), mit:
- einer Hauptladequelle;
- einer Batterie (1) mit zumindest zwei in Serie geschalteten Batteriezellen (11, 12, 13), die mit der Hauptladequelle verbunden und an die ein Verbraucher anschließbar ist; und
- einem Hilfsladeregler (5),
wobei der Hilfsladeregler an seiner Eingangsseite mit der Gesamtbatterie (1) verbunden ist,
wobei der Hilfsladeregler an seiner Ausgangsseite selektiv mit zumindest einer der Batteriezellen (11, 12, 13) verbunden ist, so dass ein selektives Vollladen einer ausgewählten Batteriezelle (11, 12, 13) ausgeführt wird, wobei durch das Vollladen und definierte Überladen der Batteriezelle (11, 12, 13) eine Säureschichtung abgebaut und die Bildung grobkristalliner Entladeprodukte vermieden wird, und so dass ein Angleichen des Ladezustands der ausgewählten Batteriezelle an die Ladezustände der anderen Batteriezelle (11, 12, 13) ausgeführt wird.

15. Vorrichtung nach Anspruch 14, **dadurch gekennzeichnet, dass** die Hauptladequelle eine Hauptstromquelle (3) und einen Hauptladeregler (2) umfasst.

16. Vorrichtung nach Anspruch 15, **dadurch gekennzeichnet, dass** die Hauptstromquelle (3) eine Solarzelle, eine Solarzellenanlage, eine Windkraftanlage, eine Lichtmaschine eines Kraftfahrzeugs oder eine vergleichbare Energiequelle ist, die aufgrund äußerer Umstände nur zeitlich eingeschränkt Energie liefert.

17. Vorrichtung nach einem der Ansprüche 14 bis 16, **dadurch gekennzeichnet, dass** die ausgewählte Batteriezelle (11, 12, 13) über eine Schaltmatrix (6) mit dem Hilfsladeregler (5) verbunden wird.

18. Vorrichtung nach einem der Ansprüche 14 bis 17, **dadurch gekennzeichnet, dass** die Schaltmatrix (6) über Steuerleitungen (71, 72, 73) mit einer Steuervorrichtung (7) zur Steuerung der Schaltvorgänge verbunden ist.

19. Vorrichtung nach Anspruch 18, **dadurch gekennzeichnet, dass** die Steuervorrichtung (7) mit zumindest einem Batteriesensor (9, 10) zur Übertragung zumindest eines Batterieparameters an die Steuervorrichtung (7) verbunden ist.

20. Vorrichtung nach Anspruch 18 oder 19, **dadurch gekennzeichnet, dass** die Steuervorrichtung (7) mit dem Hilfsladeregler (5) zur Übertragung zumindest eines Batterieparameters einer ausgewählten Batteriezelle (11, 12, 13) an die Steuervorrichtung (7) während des selektiven Ladevorgangs verbunden ist.

21. Vorrichtung nach einem der Ansprüche 18 bis 20, **dadurch gekennzeichnet, dass** die Steuervorrichtung (7) mit dem Hilfsladeregler (5) zur Übertragung eines Ladeparameters an den Hilfsladeregler (5) verbunden ist.

22. Vorrichtung nach Anspruch 15 oder 16 sowie einem der Ansprüche 18 bis 21, **dadurch gekennzeichnet, dass** die Steuervorrichtung (7) mit dem Hauptladeregler (2) zur Übertragung zumindest eines Gesamtbatterieparameters oder eines Parameters der Hauptstromquelle (3) an die Steuervorrichtung (7) verbunden ist.

## Claims

1. A charging method for lengthening the service life of batteries, in which, in addition to a main charging process of a battery (1) with at least two battery cells (11, 12, 13) connected in series, an auxiliary charging process **characterised by** the following steps is carried out:
(a) selective full charging of a selected battery cell (11, 12, 13), wherein acid layering is reduced by means of the full charging and defined overcharging of the battery cell (11, 12, 13) and the formation of coarse crystalline discharge products is avoided, and
(b) comparison of the charging state of the selected battery cell with the charging states of the other battery cells (11, 12, 13),
wherein the entire battery (1) is used as current source for the full charging of a selected battery cell (11, 12, 13).

2. The charging method according to Claim 1, **characterised in that** the selective charging takes place using an auxiliary charge controller (5).

3. The charging method according to one of the preceding claims, **characterised in that** the comparison of the charging state takes place dissipatively.

4. The charging method according to one of the preceding claims, **characterised in that** for comparing the charging state, the voltage of the selected battery cell (11, 12, 13) is compared with an average cell voltage.

5. The charging method according to one of the preceding claims, **characterised in that** the selective charging takes place at regular time intervals.

6. The charging method according to one of the preceding claims, **characterised in that** the selection and charging duration of the selected battery cell (11, 12, 13) is controlled as a function of at least one battery parameter or a combination of battery parameters.

7. The charging method according to Claim 6, **characterised in that** the battery parameter is a parameter of a battery cell (11, 12, 13) or of the entire battery (1).

8. The charging method according to Claim 6 or 7, **characterised in that** at least one battery parameter is constantly monitored.

9. The charging method according to one of Claims 6 to 8, **characterised in that** at least one battery parameter is monitored during the selective charging process.

10. The charging method according to one of Claims 6 to 9, **characterised in that** at least one battery parameter is recorded for determining a charging history.

11. The charging method according to Claim 10, **characterised in that** battery cells (11, 12, 13) which have been fully charged less often are preferred during the selection for the selective charging process.

12. The charging method according to one of Claims 6 to 11, **characterised in that** the battery parameter is a voltage value, a current value, a temperature value, a charging state or the like.

13. A use of the charging method according to one of the preceding claims in lead batteries, nickel-cadmium batteries or nickel-metal hydride batteries.

14. A device for lengthening the service life of a battery (1), with:
- a main charging source;
- a battery (1), with at least two battery cells (11, 12, 13) connected in series, which is connected to the main charging source and to which a consumer can be connected; and
- an auxiliary charge controller (5), wherein the auxiliary charge controller is connected at the input side thereof to the entire battery (1),
wherein the auxiliary charge controller is selectively connected at the output side thereof to at least one of the battery cells (11, 12, 13), so that a selective full charging of a selected battery cell (11, 12, 13) is executed, wherein by means of the full charging and defined overcharging of the battery cell (11, 12, 13) an acid layering is reduced and the formation of coarse crystalline discharge products is avoided, and so that a comparison of the charging state of the selected battery cell with the charging states of the other battery cells (11, 12, 13) is executed.

15. The device according to Claim 14, **characterised in that** the main charging source comprises a main current source (3) and a main charge controller (2).

16. The device according to Claim 15, **characterised in that** the main current source (3) is a solar cell, a solar cell system, a wind power installation, an alternator of a motor vehicle or a comparable energy source, which on account of external circumstances only delivers energy in a temporally limited manner.

17. The device according to one of Claims 14 to 16, **characterised in that** the selected battery cell (11, 12, 13) is connected via a switching matrix (6) to the auxiliary charge controller (5).

18. The device according to one of Claims 14 to 17, **characterised in that** the switching matrix (6) is connected via control lines (71, 72, 73) to a control device (7) for controlling the switching processes.

19. The device according to Claim 18, **characterised in that** the control device (7) is connected to at least one battery sensor (9, 10) for transmitting at least one battery parameter to the control device (7).

20. The device according to Claim 18 or 19, **characterised in that** the control device (7) is connected to the auxiliary charge controller (5) for transmitting at least one battery parameter of a selected battery cell (11, 12, 13) to the control device (7) during the selective charging process.

21. The device according to one of Claims 18 to 20, **characterised in that** the control device (7) is connected to the auxiliary charge controller (5) for transmitting a charging parameter to the auxiliary charge controller (5).

22. The device according to Claim 15 or 16 and also one of Claims 18 to 21, **characterised in that** the control device (7) is connected to the main charge controller (2) for transmitting at least one entire battery parameter or a parameter of the main current source (3) to the control device (7).

## Revendications

1. Procédure de charge pour prolonger la durée de vie de batteries, dans laquelle, outre une opération de charge principale d'une batterie (1) comprenant au moins deux cellules de batterie (11, 12, 13) branchées en série, on exécute une opération de charge auxiliaire **caractérisée par** les étapes suivantes :
(a) charge complète sélective d'une cellule de batterie choisie (11, 12, 13), de sorte que par la charge complète et une surcharge définie de la cellule de batterie (11, 12, 13) on résorbe une formation de couches dans l'acide et on évite la formation de produits de décharge de structure cristalline grossière, et
(b) égalisation de l'état de charge de la cellule de batterie choisie aux états de charge des autres cellules de batterie (11, 12, 13),
dans lequel on utilise la batterie dans son ensemble (1) comme source de courant pour la charge complète d'une cellule de batterie choisie (11, 12, 13).

2. Procédure de charge selon la revendication 1, **caractérisée en ce que** la charge sélective a lieu en utilisant un régulateur de charge auxiliaire (5).

3. Procédure de charge selon l'une des revendications précédentes, **caractérisée en ce que** l'égalisation de l'état de charge a lieu par dissipation.

4. Procédure de charge selon l'une des revendications précédentes, **caractérisée en ce que** pour égaliser l'état de charge, on égalise la tension de la cellule de batterie choisie (11, 12, 13) à une tension de cellule moyenne.

5. Procédure de charge selon l'une des revendications précédentes, **caractérisée en ce que** la charge sélective a lieu à intervalles temporels réguliers.

6. Procédure de charge selon l'une des revendications précédentes, **caractérisée en ce que** le choix et la durée de vie de la cellule de batterie choisie (11, 12, 13) sont commandés en fonction d'au moins un paramètre ou d'une combinaison de paramètres de la batterie.

7. Procédure de charge selon la revendication 6, **caractérisée en ce que** le paramètre de la batterie est un paramètre d'une cellule (11, 12, 13) de la batterie ou un paramètre de l'ensemble de la batterie (1).

8. Procédure de charge selon la revendication 6 ou 7, **caractérisée en ce que** l'on surveille en permanence au moins un paramètre de la batterie.

9. Procédure de charge selon l'une des revendications 6 à 8, **caractérisée en ce que** l'on surveille au moins un paramètre de la batterie pendant l'opération de charge sélective.

10. Procédure de charge selon l'une des revendications 6 à 9, **caractérisée en ce que** l'on enregistre au moins un paramètre de la batterie pour analyser un historique de charge.

11. Procédure de charge selon la revendication 10, **caractérisée en ce que** des cellules (11, 12, 13) de la batterie qui ont été plus rarement totalement chargées sont préférées lors du choix de l'opération de charge sélective.

12. Procédure de charge selon l'une des revendications 6 à 11, **caractérisée en ce que** le paramètre de la batterie est une valeur de tension, une valeur de courant, une valeur de température, un état de charge, ou similaire.

13. Utilisation de la procédure de charge selon l'une des revendications précédentes pour des batteries au plomb, des batteries nickel-cadmium ou des batteries nickel-hydrure métallique.

14. Dispositif pour prolonger la durée de vie d'une batterie (1), comprenant :
- une source de charge principale ;
- une batterie (1) comprenant au moins deux cellules de batterie (11, 12, 13) branchées en série, qui sont reliées à la source de charge principale et qui peuvent être branchées à un dispositif utilisateur ; et
- un régulateur de charge auxiliaire (5),
dans lequel le régulateur de charge auxiliaire est relié du côté de son entrée à l'ensemble de la batterie (1),
dans lequel le régulateur de charge auxiliaire est relié du côté de sa sortie de manière sélective à l'une au moins des cellules de batterie (11, 12, 13), de sorte qu'une charge complète sélective d'une cellule de batterie choisie (11, 12, 13) est exécutée, de sorte que par la charge complète et une surcharge définie de la cellule de batterie (11, 12, 13) une formation de couches dans l'acide est résorbée et la formation de produits de décharge à structure cristalline grossière est évitée, et de sorte qu'une égalisation de l'état de charge de la cellule de batterie choisie aux états de charge des autres cellules de batterie (11, 12, 13) est exécutée.

15. Dispositif selon la revendication 14, **caractérisé en ce que** la source de charge principale comprend une source de courant principale (3) et un régulateur de charge principal (2).

16. Dispositif selon la revendication 15, **caractérisé en ce que** la source de courant principale (3) est une cellule solaire, une installation de cellules solaires, une installation éolienne, un générateur électrique d'un véhicule automobile, ou une source d'énergie comparable, qui délivre de l'énergie uniquement de façon limitée dans le temps en raison de circonstances extérieures.

17. Dispositif selon l'une des revendications 14 à 16, **caractérisé en ce que** la cellule de batterie (11, 12, 13) choisie est reliée au régulateur de charge auxiliaire (5) via une matrice de commutation (6).

18. Dispositif selon l'une des revendications 14 à 17, **caractérisé en ce que** la matrice de commutation (6) est reliée via des lignes de commande (71, 72, 73) à un dispositif de commande (7) pour la commande des opérations de commutation.

19. Dispositif selon la revendication 18, **caractérisé en ce que** le dispositif de commande (7) est relié à au moins un capteur de batterie (9, 10) pour la transmission d'au moins un paramètre de batterie au dispositif de commande (7).

20. Dispositif selon la revendication 18 ou 19, **caractérisé en ce que** le dispositif de commande (7) est relié au régulateur de charge auxiliaire (5) pour la transmission d'au moins un paramètre d'une cellule de batterie (11, 12, 13) choisie au dispositif de commande (7) pendant l'opération de charge sélective.

21. Dispositif selon l'une des revendications 18 à 20, **caractérisé en ce que** le dispositif de commande (7) est relié au régulateur de charge auxiliaire (5) pour la transmission d'un paramètre de charge au régulateur de charge auxiliaire (5).

22. Dispositif selon la revendication 15 ou 16, ainsi que l'une des revendications 18 à 21, **caractérisé en ce que** le dispositif de commande (7) est relié au régulateur de charge principal (2) pour la transmission d'au moins un paramètre de l'ensemble de la batterie ou d'un paramètre de la source de courant principale (3) au dispositif de commande (7).
